# EUROPEAN PATENT APPLICATION

(11) **EP 1 734 193 A1**
(43) Date of publication of application: **20.12.2006**
(21) Application number: 05425437.0
(22) Date of filing: 17.06.2005
(51) Int. Cl.: E04B 1/80, E04C 2/20, B29C 44/56

(54) **Method for producing a thermoisolating panel and panel so obtained**

(71) Applicant: Decem S.r.l., 64036 Cellino Attanasio TE (IT)
(72) Inventor: Sboarina, Stefano, 37126 Verona (IB); Chicchirichi, Lorenzo, 64018 Tortoreto (Terano) (IT)
(74) Representative: Ferrari, Barbara

(57) **Abstract**

Method for producing a thermoinsulating panel of extruded polystyrene foam of predetermined thickness (S) and predetermined width (L).

The method comprises a first step during which a plurality of elementary panels (14) of extruded polystyrene foam are stacked until they reach a determinate stacking height equal to said predetermined width (L) of the thermoinsulating panel (12) to be obtained. Subsequently, the elementary stacking panels (14) are fastened together to form a compact block (16).

The method comprises a final step of slicing the compact block (16) in the direction of the stack height (F) with slices of thickness (S₀) equal to the predetermined thickness (S) of the thermoinsulating panel (12).

## Description

### Field of application

The present invention refers, in its most general aspect, to a method for manufacturing a thermoinsulating panel in an appropriate expanded plastic material, preferably, though not exclusively, extruded polystyrene foam.

More in particular, the present invention refers to a method for manufacturing a thermoinsulating panel starting from elementary panels of extruded polystyrene foam, or XPS, of predetermined thickness and predetermined width.

The present invention also refers to a thermoinsulating panel of extruded polystyrene foam, obtained with the above-mentioned method.

### Prior art

With particular reference to the building sector and refrigeration industry, the wide use of thermoinsulating panels in expanded polystyrene to make thermally insulated structures is known.

The expanded polystyrene presents itself in the form of a closed-cell cellular structure; the insulating capacity of the insulating panels predominantly depends on this cellular structure.

And it is known that such panels are generally obtained through the extrusion/expansion of polystyrene by way of a die opening substantially shaped as a rectangular slit of determinate dimensions (height and width).

In particular, the slit has a height in the order of a millimetre and a width equal to approximately half of the width of the panel to be obtained.

Although advantageous from different points of view, the aforementioned method of producing thermoinsulating panels according to the prior art has recognised drawbacks that have not been overcome yet.

The main drawback is that with such technique it is difficult to make an extruded panel having a relatively high thickness, in the order of 110-200 mm and, at the same time, a high thermoinsulating capacity, or rather a low thermal conductivity, for example in the order of 0.030 W /mK.

It is indeed known that the thermal conductivity strictly depends on the shape and size of the cells which form the cellular structure of the extruded polystyrene foam. In particular, the panel density being equal, the greater the cell size are, the lower the panel thermoinsulating capacity is.

It is further known that the size of the cells mainly depends on the process of expansion adopted as well as on the size of the panel to be obtained. In particular, expansion techniques being the same, the greater the thickness of the panel to be obtained with the process of extrusion/expansion is, the greater the size of the cells is.

Thus there is a deterioration of the panel's thermal performance, intended as insulating capacity, for panels having relatively high thicknesses.

In this regard, it is known that the thermal conductivity values of expanded panels, obtained for example by means of carbon dioxide as expanding gas, increase from approximately 0.030 to 0.040 W / mK with the increase of panel thickness from approximately 20 mm to 200 mm.

To resolve these drawbacks, the prior art has suggested stacking together a plurality of elementary panels of relatively reduced thickness which, thanks to their reduced thickness, have cells of smaller size and a satisfactory thermal conductivity.

The elementary panels are fastened to each other to obtain a stack with height equal to the desired thickness of the final panel.

This known technique nevertheless has the drawback that the final panel thickness is constrained by the thickness of the elementary panel, being made of a multiple of these.

The technical problem underlying the present invention is that of devising a method for producing insulating panels in an appropriate extruded plastic material, in particular and preferably extruded polystyrene foam, having a relatively high thickness, even greater than 110 mm and unconstrained by the thickness of the elementary panels, and ensuring a satisfactory thermoinsulating capacity at the same time.

### Summary of the invention

Such technical problem is solved according to the present invention by a method of the abovementioned type, which comprises the following steps:
- stacking a plurality of elementary panels of extruded polystyrene foam until they reach a determinate stack height equal to said predetermined width of the thermoinsulating panel to be obtained,
- fastening the elementary elements of the stack to form a compact block of elementary panels,
- slicing the compact block in the direction of the stack height with slices having thickness equal to said predetermined panel thickness.

The main advantage of the present invention lies in the possibility of making a thermoinsulating panel of satisfactory thermoinsulating capacity, due to the fact that elementary panels of relatively reduced thickness are employed, and having at the same time a relatively high thickness, even greater than 110 mm, which is unconstrained by the thickness of the elementary panels.

Preferred modalities for carrying out the method according to the invention are described in the dependent claims 2 to 11.

The above-mentioned technical problem is likewise solved by a thermoinsulating panel in accordance with claim 12.

Preferred modalities for manufacturing the thermoinsulating panel according to the invention are described in the dependent claims 13 to 16.

Further features and advantages of the method and thermoinsulating panel according to the present invention shall become clear from the following description of a preferred embodiment thereof, made by way of an indicative and not limiting example with reference to the attached drawings.

### Brief description of the drawings

Figures 1A-1D show respective schematic views of an operative sequence of the method according to the invention;
Figures 2A-2C show respective schematic views of an operative sequence of the method according to the invention in accordance with a further embodiment;
Figure 3 shows a macroscopic view, not to scale, of the cellular structure of a plurality of elementary panels during the stacking step;
Figure 4 shows a block comprising the stacked elementary panels of figure 3;
Figure 5 shows a macroscopic view, not to scale, of the cellular structure of a portion of thermoinsulating panel obtained through the slicing of the block of figure 4;
Figure 6 shows a micrograph of a section of an elementary panel of extruded polystyrene foam having a closed-cell structure of substantially spherical shape;
Figure 7 shows a micrograph of a section of an elementary panel of extruded polystyrene foam having a closed-cell structure of elongated shape according to a favoured orientation.

### Detailed description

With reference to the attached figures, reference numeral 10 indicates, in general, an illustrative scheme of the method according to the invention for manufacturing a thermoinsulating panel 12 of extruded polystyrene foam.

The panel 12 to be obtained has a predetermined thickness S and a predetermined width L.

For conventional purposes, within the scope of the present invention, the term a predetermined width L of the panel 12 to be obtained is to be intended as the extension of one of the sides of the panel 12.

In the case of the illustrated solution, the panel 12 has a rectangular basic shape; in consequence the width L coincides with the value of the shortest side of the panel 12. Nothing prevents however the width L from coinciding with the value of the longest side of the panel.

In accordance with the invention, the thermoinsulating panel 12 is obtained from a plurality of elementary panels 14, or base panels, of extruded polystyrene foam, which have a closed-cell structure 22.

The elementary panels 14 are rectangular of length L1 and width L2 and are made through a process of extrusion of a molten polymer comprising polystyrene and at least one expanding agent. The process of extrusion is carried out according to modalities known in the art, and in particular through a die opening of rectangular shape.

As expanding gas, carbon dioxide is preferably employed, or a mixture of the same with expanding gases deriving from oil, as for example alkanes (iso-butane), or from syntheses of these last, such as for example fluoroalkanes (difluoroethane) .

Ingredients of known type may be added to the polystyrene, in accordance with the modalities known in the sector, such as crosslinking resins, anticollapsing agents, flame retardants, colorants, nucleants or other similar ingredients.

It should be noted that the operative conditions chosen to make the elementary panels 14 are not limiting within the scope of the present invention.

Nevertheless, it is preferable to make elementary panels 14 having a reduced thickness S' comprised preferably between 30 mm and 100 mm.

Due to the relatively reduced thickness S' of the elementary panels 14, the elementary panels 14 have thermal conductivity reduced to the order of 0.030 W / mK.

It should also be noted that, due to the relatively reduced thickness of the elementary panels 14, it is possible to employ carbon dioxide as expanding gas, or a mixture based on carbon dioxide. It is indeed known that the carbon dioxide, or a mixture of the same, may be employed as expanding gas to make panels with relatively reduced thicknesses.

Preferably, the elementary panels 14 have a density in terms of mass per volume unit comprised between 25 and 40 Kg / m³.

Subsequently, the elementary panels 14 are stacked in a direction F until a stack height is obtained equal to the width L of the thermoinsulating panel 12.

In other words, according to the invention, a high number of elementary panels 14 are stacked until they have reached the value of the width L of panel 12, which is to be obtained.

Subsequently, the elementary panels 14 of the stack are fastened to form a compact block 16.

Preferably, the fastening of the panels is carried out through gluing.

In one solution of the invention, the gluing is carried out with a conventional adhesive, such as for example polyurethane adhesive.

In particular, before completing the stacking, the polyurethane adhesive is distributed in a uniform manner on the surface of the elementary panels 14.

According to a further embodiment, the fastening of the elementary panels 14 occurs through the heating of the surface area of the panels 14 themselves, taking advantage of the thermoplastic properties of these last. Each surface of the elementary panels 14 is heated and made adhere to the adjacent heated surface of a panel 14 thereby obtaining the desired joining of the panels.

Subsequently, block 16 is cut into slices in the direction of the stacking height F of the elementary panels 14 with slices of thickness So corresponding with the thickness S of the panel 12 to be obtained.

In substance, the cut of the block 16 is carried out in such a manner that the width or cut step corresponds with a predetermined thickness S of the thermoinsulating panel 12 to be obtained. Thus for each slice a panel 12 of thickness S is obtained, formed by adjacent portions 14' of the elementary panels 14 and having overall width L.

The thickness So of the slice is therefore chosen from time to time based on the thickness S desired for the thermoinsulating panel 12 which must be made.

It follows that, according to the invention, the final thickness S of the panel 12 is completely unconstrained by the thickness S' of the elementary panels 14 and is correlated only with the cut step.

It should be noted moreover that, with the variation of the thickness S of the obtained panel 12, the thermal conductivity of the panel 12 does not substantially vary, other conditions being the same.

Indeed, as indicated above, the thermal conductivity depends on the process of extrusion of the elementary panels 14.

Consequently, by utilising an elementary panel 14 of relatively low thermal conductivity in the order of 0.030 W / mK, such conductivity value is valid also for the final panel 12, independently from its thickness S. Thus a panel of relatively high thickness S and relatively low conductivity is obtained.

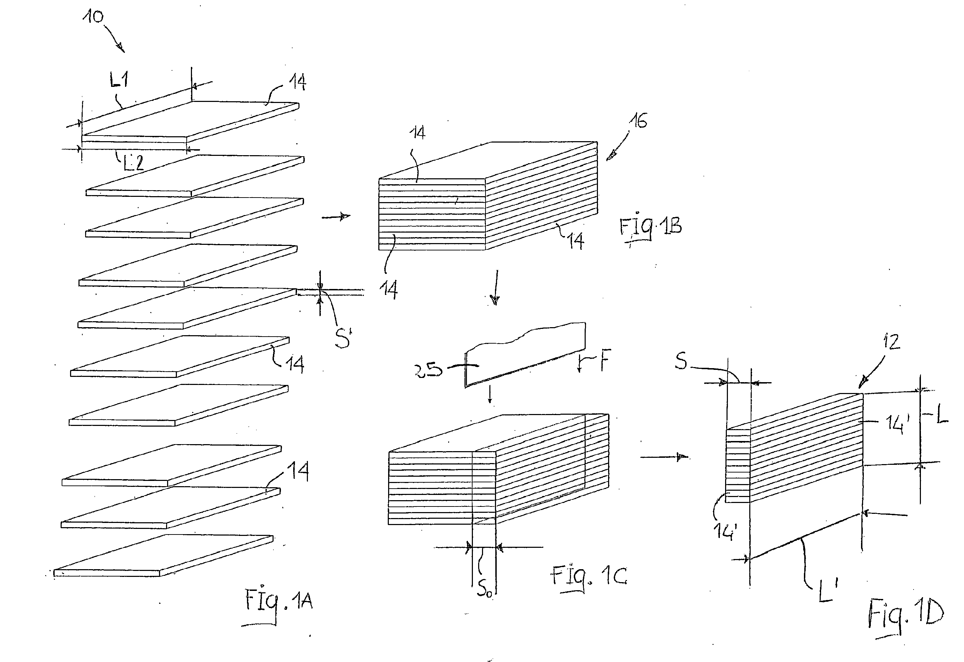

With reference to figure 1C, number 25 schematically indicates a cutting element.

It is possible to observe that the variation of the cut distance may be obtained in a simple manner by appropriately controlling the position of cutting element 25 with respect to block 16, thus permitting the obtainment of any more or less high thickness S of panel 12.

The cutting may be carried out according to a known modality, such as for example those described below.

Preferably the modality of the cutting is chosen in relation with the modality of the fastening of the elementary panels 14.

For example, in the case of thermoplastic fastening through the heating of the panel 14 surfaces, a hot wire cutting of known type may be carried out.

On the contrary, in the case of gluing by way of an adhesive substance, a cut is carried out through the removal of material.

Advantageously, to obtain a further improvement of the thermal conductivity of panel 12, the method according to the present invention includes controlling the operative conditions of the extrusion process of the elementary panels 14 in order to obtain polystyrene foam having a determinate closed-cell structure 22.

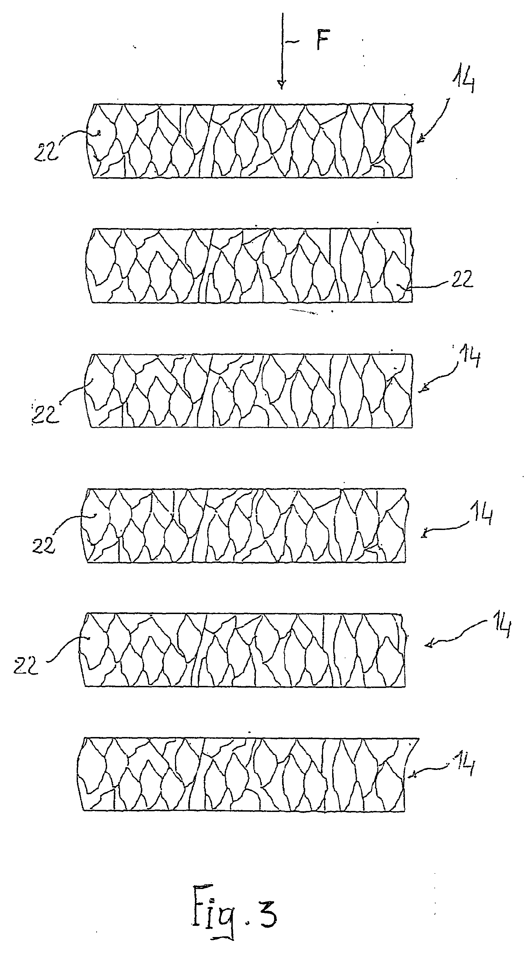

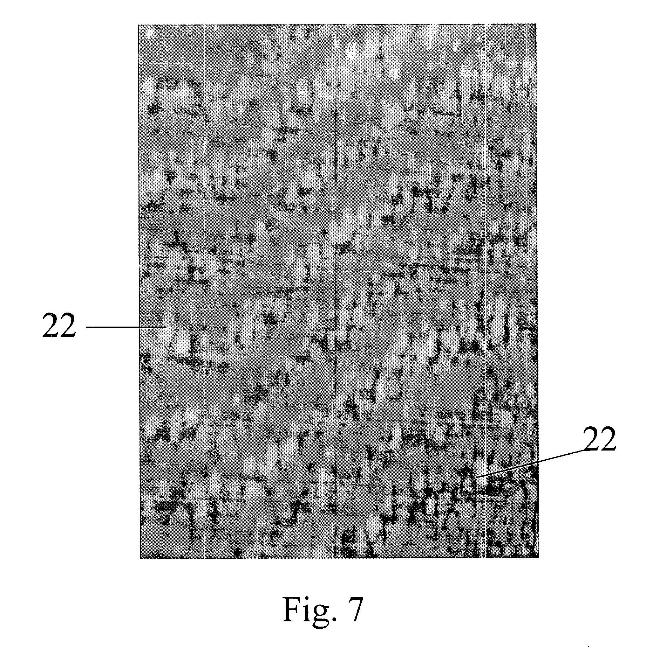

In particular, the extrusion/expansion of the elementary panels 14 is carried out such that the cells 22 of extruded polystyrene foam are preferentially elongated in the direction of the thickness S' of the elementary panel 14 (figures 3 and 7).

In particular, figure 7 illustrates a micrograph of a section of elementary panel 14 in which the cells 22 of extruded polystyrene foam are clearly visible, elongated in the direction of the thickness S'.

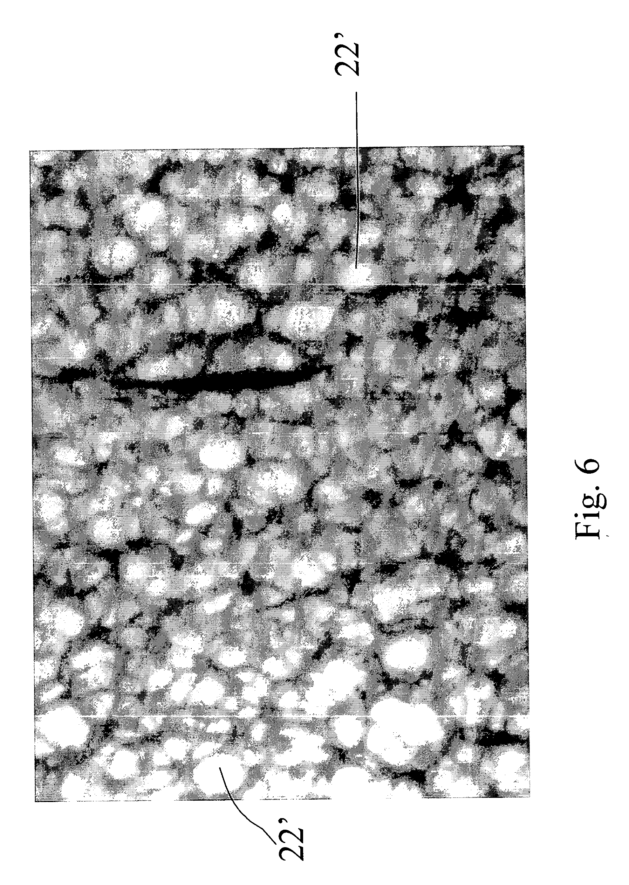

As a comparison, figure 6 illustrates a panel in which the cells 22' have a substantially spherical shape.

Thus it has been obtained that, in the context of each elementary panel 14, the cells 22 are mainly elongated in the direction of the thickness S', or height, of the elementary panels 14, as it is schematically illustrated in figure 3 and in the micrograph of figure 7.

It is clear that the cells 22 of figures 3-5 are not illustrated in actual scale, but are expressly illustrated in a macroscopic view in order to explain in an intuitive manner the direction of preferential elongation of the cells 22 forming the elementary panels 14.

To such consideration it should be noted that it is generally known in the sector to make panels of extruded polystyrene foam with cells elongated in the direction of the panel thickness.

Indeed, it is known that, by modifying the opening of the die and the calibration, an elongation of the cells may be obtained in the direction of the thickness with a corresponding modification of the ratios of the mechanical features of the panel in three dimensions, i.e. thickness, width and length.

It should be noted, however, that even if it is known to produce panels with cells elongated in the direction of the thickness, normally these are not chosen on this basis of this feature since the elongation in the direction of the thickness, or rather in the direction of the thermal flux, determines a worsening of thermal conductivity.

On the other hand, thanks to the method according to the invention, the selection of elementary panels 14 with cells 22 elongated in the direction of the thickness S' involves an improvement of thermal conductivity.

The reasons for this are the following.

From figure 3 it is indeed possible to observe that, according to the method of the present invention, the elementary panels 14 are stacked in the direction F of preferential elongation of the extruded cells 22.

In substance, the direction of elongation coincides with the direction F of the height of the block 16 of stacked panels. Consequently, the block 16 is cut into slices according to a direction which is parallel to the direction of elongation of the cells 22.

In figure 4 it is possible to recognise the above-mentioned correspondence between the slicing direction of the elementary panels 14 and the elongated orientation of the cells 22. In particular, in figure 4, the cutting direction of the elementary panels 14 is illustrated with a dashed line.

Due to the privileged orientation, after the slice, a panel 12 is thus obtained in which the extruded cells 22 are elongated according to a direction which is orthogonal to the height or thickness S of the final panel 12.

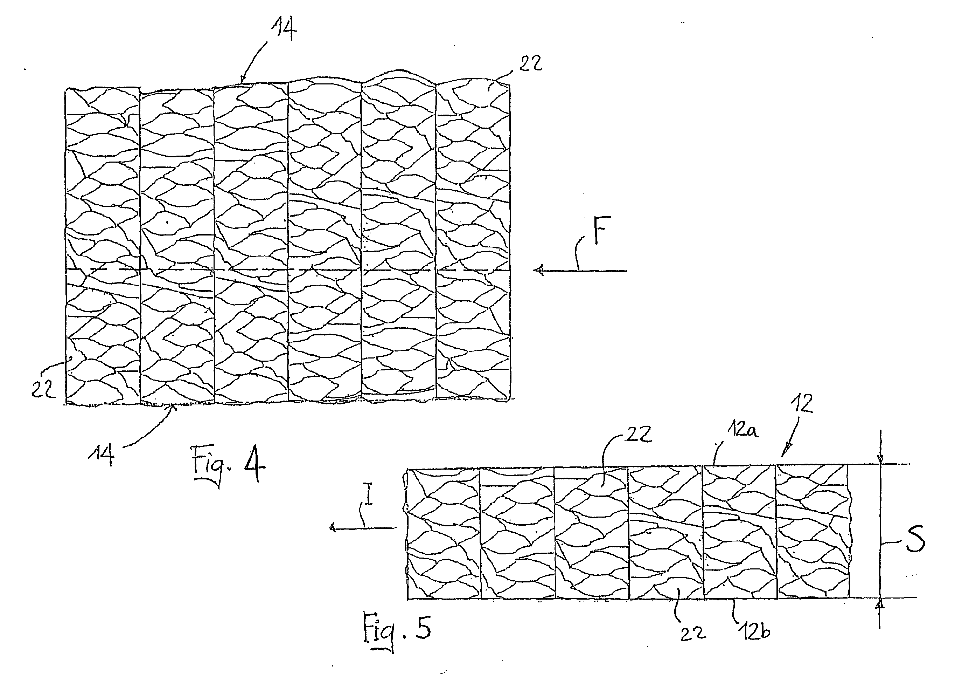

Figure 5 partially illustrates, in schematic mode, panel 12 obtained from the slice of the block 16, in which the orientation of the cells 22 with respect to its thickness S is visible. In particular, it has been observed that, due to this preferential orientation, the cells 22 of the panel 12 have a particularly reduced size in the direction of the thickness S of the panel 12.

In other words, the panel 12 is formed by cells 22 having a smaller size between the two opposing surfaces 12a and 12b of the panel 12.

Consequently, since the thermal resistance of the insulating materials is always measured in the direction of the thickness S, this being the direction of the thermal flux, a clear improvement has been obtained, that is to say a lowering of even 10% of the thermal conductivity of the panel 12, to a value of approximately 0.026 - 0.027 W / Km and, therefore, an improvement of the performance of thermal insulation of a panel of thickness greater than 110 mm.

With reference to the illustrated solution, the preferential size and shape of the elementary panels 14 and the final thermoinsulating panel 12 shall now be described.

The elementary panels 14 have a substantially rectangular shape, for example of length L1 equal to 3000 mm and length L2 equal to 1200 or 600 mm. In this manner, the elementary panels 14, once stacked, form a block 16 substantially having the form of a parallelepiped with a rectangular base. It is clear that the sizes of the elementary panels 14 are absolutely optional within the scope of the present invention, and are chosen each time according to necessity.

The height, which, as mentioned above, is equal to width L of the final thermoinsulating panel 12, obviously depends on the number of stacked elementary panels 14.

Regarding the size of the panel 12, in the case of the solution illustrated in figures 1C and 1D, the cutting element 25 is operated so as to cut the elementary panels 14 parallel to their length L1 with a slice thickness So, for example of approximately 200 mm, thereby obtaining a panel 12 of narrow and long shape.

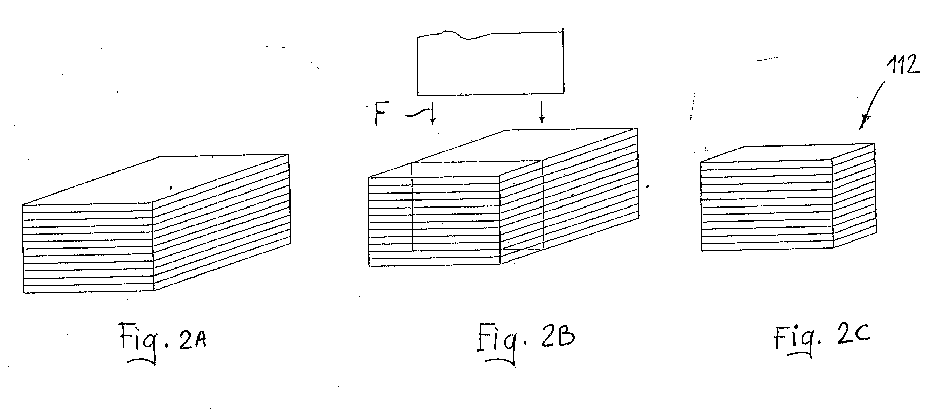

In the case of the solution illustrated in figure 2B, the cutting element 25 is operated so as to cut the elementary panels 14 parallel to their length L2, thereby obtaining a panel 112 having a more reduced length L'.

The main advantage of the present invention lies in the possibility of making a thermoinsulating panel of extruded polystyrene foam having a high thickness as necessary, unconstrained by the thickness of the elementary panels.

Moreover a thermoinsulating panel has been obtained having satisfactory thermal conductivity, which depends on the extrusion process of the elementary panels 14.

Moreover, a further advantage is offered by the possibility of obtaining a further lowering of the thermal conductivity by taking advantage of the elongation of the cells, due the possibility to rotate the direction of elongation orthogonally to the thickness of the panel.

Another advantage of the present invention lies in the fact that it is possible to obtain, in a simple and economic manner, thermoinsulating panels of any thickness, thermal conductivity being equal.

In particular, to vary the thickness of the panel it is sufficient to set a different cutting position of the cutting element, with respect to the compact block.

A further advantage of the present invention lies in the fact that panels of relatively high thicknesses may be made by utilising carbon dioxide as expanding gas.

Of course, a man skilled in the art can make several changes and variants to the method for producing a thermoinsulating panel of extruded plastic material and the panel thus obtained as described above, in order to satisfy contingent and specific requirements, all of which are in any case covered by the scope of protection of the present invention, as defined by the following claims.

## Claims

1. Method for producing a thermoinsulating panel of extruded polystyrene foam of predetermined thickness (S) and predetermined width (L), **characterised in that** it comprises the following steps:
- stacking a plurality of elementary panels (14) of extruded polystyrene foam until they reach a determinate stack height equal to said predetermined width (L) of the thermoinsulating panel (12) to be obtained,
- fastening the elementary panels (14) of the stack to form a compact block (16), and
- slicing the compact block (16) in the direction of the height (F) of stacking with slices having thickness (So) equal to said predetermined thickness (S) of the thermoinsulating panel (12).

2. Method according to claim 1, **characterised in that** the elementary panels (14) have a determinate thickness (S') comprised between 30 mm and 100 mm.

3. Method according to claims 1 or 2, **characterised in that** each slice is cut so as to obtain a panel of determinate thickness (S) of at least 110 mm.

4. Method according to claims 1, 2 or 3, **characterised in that** each slice is cut so as to obtain a panel of thickness (S) equal to approximately 200 mm.

5. Method according to claim 1, **characterised in that** the elementary panels (14) are extruded through the employment of carbon dioxide as expanding gas.

6. Method according to claim 1, **characterised in that** the elementary panels (14) are fastened through gluing.

7. Method according to claim 6, **characterised in that** the gluing is carried out before the completion of the stacking of the plates (14), depositing an adhesive on the surface of the elementary panels (14) and subsequently stacking the elementary panels (14).

8. Method according to claim 1, **characterised in that** the elementary panels (14) are joined through the heating of the surfaces of the elementary panels (14) and mutual adhesion of the heated surfaces.

9. Method according to claim 8, **characterised in that** the cut is carried out through hot wire cutting.

10. Method according to claim 7, **characterised in that** the cut is carried out through the removal of material.

11. Method according to any one of the preceding claims, in which the elementary panels (14) have a closed-cell structure (22) and are made through the extrusion of a molten polymer comprising polystyrene and at least one expanding agent through a die opening, **characterised in that** the elementary panels (14) are extruded so as to obtain a preferential elongation of the cells (22) in a direction parallel to the thickness (S') of the elementary panels (14), so that, after the stacking, said direction of the stacking height (F) coincides with the direction of preferential elongation of the cells (22).

12. Thermoinsulating panel of extruded polystyrene foam, **characterised in that** it comprises a plurality of adjacent bars (14'), fastened together in a single body, said panel being obtainable according to the method in accordance with any one of the preceding claims from 1 to 11.

13. Thermoinsulating panel according to claim 12, in which the extruded polystyrene foam has a closed-cell structure (22), **characterised in that** the bars (14') are arranged so that the cells (22) are elongated along a direction of elongation substantially orthogonal to the thickness (S) of the panel (12).

14. Thermoinsulating panel according to claim 12 or 13, having a thermal conductivity comprised between approximately 0.026 and 0.027 W / mK.

15. Thermoinsulating panel according to any one of the claims from 12 to 14, having a thickness of at least 110 mm.

16. Thermoinsulating panel according to any one of the claims from 12 to 14, having a thickness of 200 mm.
